# EUROPÄISCHE PATENTSCHRIFT

(11) **EP 4 295 433 B1**
(45) Veröffentlichungstag und Bekanntmachung des Hinweises auf die Patenterteilung: **18.03.2026**
(21) Anmeldenummer: 22711462.6
(22) Anmeldetag: 21.02.2022
(51) Int. Cl.: H01M 10/42, H01M 10/48

(54) **PROPAGATIONSTESTZELLE FÜR SEKUNDÄRE ELEKTRISCHE BATTERIEZELLEN UND ZELLMODULE**
PROPAGATION TEST CELL FOR SECONDARY ELECTRICAL BATTERY CELLS AND CELL MODULES
CELLULE DE TEST DE PROPAGATION POUR CELLULES DE BATTERIE ÉLECTRIQUE SECONDAIRES ET MODULES DE CELLULES

(30) Priorität: 22.02.2021 DE 102021104098
(43) Veröffentlichungstag der Anmeldung: 27.12.2023
(73) Patentinhaber: IAV GmbH Ingenieurgesellschaft Auto und Verkehr, 10587 Berlin (DE)
(72) Erfinder: TRZASKA, Frank, 38550 Isenbüttel (DE)
(74) Vertreter: Wanzek, Jan
(86) Internationale Anmeldenummer: PCT/DE2022/100136
(87) Internationale Veröffentlichungsnummer: WO 2022/174870

(56) Entgegenhaltungen:
- CN-A- 107 421 682
- CN-U- 201 945 527
- KR-A- 20150 054 371

## Beschreibung

### Technisches Gebiet

Die Erfindung betrifft das technische Gebiet der Überprüfung der Funktionsfähigkeit von sekundären Batteriezellen, insbesondere die Durchführung eines Propagationstests.

### Stand der Technik

Die Propagation von sekundären elektrischen Batteriezellen beschreibt den Effekt des thermischen Durchgehens, wobei aufgrund von Verunreinigungen am Separator oder äußerer mechanischer Beeinträchtigung innerhalb einer Batteriezelle ein elektrischer Kurzschluss entsteht. Der sich infolgedessen aufbauende Kurzschlussstrom kann zur Erhitzung der Schadstelle führen, wobei umliegende Bereiche und weitere Batteriezellen beschädigt werden sowie weitere Kurzschlüsse entstehen können. Diese Beschädigung kann sich über ein Zellmodul ausbreiten, wobei die im gesamten Akkumulator gespeicherte Energie in kurzer Zeit freigesetzt wird. Entsprechend ist ein Propagationstest als ein Verfahren zur Überprüfung von sekundären elektrischen Batteriezellen und Zellmodulen bezüglich mechanischer Beeinträchtigung, wie dem Eindringen oder Durchdringen von Fremdkörpern, Dendritenbildung oder auch Zellalterung bekannt, welche zu einem inneren elektrischen Kurzschluss von wenigstens einer Batteriezelle führen können.

Der Propagationstest ist bspw. in DIN EN 62619 oder in GB 38031-2020 als Ausbreitungsüberprüfung genormt, wobei ein vom weiteren Prüfaufbau isolierter Nagel, der vorzugsweise aus leitfähigem und unlegiertem Stahl besteht, in eine Batteriezelle oder ein Zellmodul teilweise eindringt oder diese vollständig durchdringt. Alternativ kann der Nagel einen keramischen Gehäuseteil oder Mantel umfassen, wobei lediglich die Spitze des Nagels aus Stahl oder einem elektrisch leitfähigem Material besteht, sodass der Nagel beim Eindringen in eine Batteriezelle gegenüber der Zellwand isoliert ist. Die geometrischen Abmessungen des Nagels, die Eindringtiefe sowie die Eindringgeschwindigkeit sind hierbei Parameter, welche in der jeweiligen Prüfnorm festgelegt werden. Generell umfasst der Nagel wenigstens einen Schaft, der als ein Stift ausgestaltet ist, der insbesondere in seiner Stabilität eingerichtet ist, um die mechanische Belastung beim Eindringen in oder Durchdringen durch wenigstens eine weitere Batteriezelle standzuhalten. Als bestanden gilt ein Propagationstest, wenn bei einem elektrischen Kurzschluss keine weiteren Batteriezellen eines Zellmoduls thermisch durchgehen. Weitere Ergebnisse können die Deformation oder mechanische Belastung, die Temperaturentwicklung als Funktion der Zeit sowie die elektrische Spannung vor und nach dem Test der Batteriezelle oder des Zellmoduls und weitere Parameter sein.

Aus dem Stand der Technik sind Vorrichtungen bekannt, welche einen reproduzierbaren Ablauf des Propagationstests ermöglichen sollen. So wird in der Offenlegungsschrift CN106272165A eine quadratische Batteriestift-Erkennungsklemme offenbart, mittels welcher weitgehend quadratische Batteriezellen eingespannt werden können und wobei der Propagationstest durch einen erfindungsgemäßen Stahlstift-Führungsmechanismus unterstützt wird. Das Gebrauchsmuster CN201096874Y offenbart ein Nagelstichprüfgerät, wobei Batteriezellen als Prüfobjekt mechanisch in eine äußere Vorrichtung eingeklemmt werden und ein Nagel durch eine hydraulisch betätigte Führungsvorrichtung zum Prüfobjekt geführt wird. In der Patentschrift CN105068013B wird eine entsprechende Vorrichtung mit pneumatischer Betätigung des Nagels offenbart.

In der Patentschrift US10718816B2 wird eine Vorrichtung offenbart, wobei ein leitfähiger Nagel mit einer elektrisch isolierten Ummantelung versehen ist, wobei Ummantelung und Nagel gemeinsam in eine Batteriezelle eindringen und der Nagel erst innerhalb der Batteriezelle aus der Ummantelung gedrückt wird, sodass dieser einen Kurzschluss zwischen einer Anode und einer Kathode erzeugt. Der elektrisch leitfähige Nagel ist hierbei an Messvorrichtungen gekoppelt, sodass die sich über den Nagel und den Kurzschluss ergebende Spannung vermessen werden kann.

Das Dokument CN107421682A offenbart eine Vorrichtung, um einen internen Kurzschluss in einer Batteriezelle während des Herstellungsprozesses zu initialisieren, umfassend einen Mechanismus, der durch einen Gasdruck aktiviert wird, der während der Befüllung der Batteriezelle mit einem Elektrolyt entsteht.

Das Dokument CN201945527U offenbart eine Vorrichtung, um einen Nadelstoßtest bei einer Batteriezelle durchzuführen, wobei eine Batterie in einen Prüfaufbau eingespannt und mittels einer Nadelstoßvorrichtung punktiert wird.

Das Dokument KR20150054371A offenbart ein Batteriepenetrationstestgerät mit einer Probenkammer, wobei Druck in der Probenkammer nach außen abgelassen werden kann, mit einer Stifthalteeinheit zum Durchführen einer vertikalen Bewegung innerhalb der Probenkammer und mit einem Prüfstift, der in einem unteren Ende der Stifthalterungseinheit installiert ist, um in eine Probe einzudringen.

Aus dem Aspekt der Sicherheitsbetrachtung von sekundären elektrischen Batteriezellen bezüglich thermischen Durchgehens ist zum einen die möglichst realistische Erzeugung eines inneren Kurzschlusses und zum anderen eine Vermessung der Ergebnisparameter des Propagationstests unmittelbar an der Schadstelle sinnvoll. Die aus dem Stand der Technik bekannten Vorrichtungen und Verfahren haben jedoch alle gemein, dass ein Nagel oder ein physisches Element von außen in eine Batteriezelle oder ein Zellmodul eingebracht wird, was verschiedene Nachteile birgt. So kann sich die Temperatur und die chemische Zersetzung von der Schadstelle aus nicht in alle Raumrichtungen gleich ausbreiten, eine Abdichtung der äußeren Einstichstelle ist erforderlich und es ist nicht möglich, Messwerte wie Temperatur, Deformation oder mechanische Belastung unmittelbar an der beanspruchten Stelle zu erfassen. Falls das thermische Durchgehen durch Erhitzen ausgelöst werden soll, ist außerdem ein thermischer Energieeintrag der benachbarten Batteriezellen unvermeidbar, was zum thermischen Durchgehen von mehr als einer Batteriezelle sowie zu fehlerbehafteten Messergebnissen führt.

### Offenbarung der Erfindung

Der vorliegenden Erfindung liegt nunmehr die Aufgabe zu Grunde, eine Propagationstestzelle bereitzustellen, die innerhalb eines Zellmoduls anstelle von einer oder mehrerer Batteriezellen angeordnet wird und über welche ein Propagationstest von innen heraus initialisierbar ist. Diese Aufgabe wird durch eine Propagationstestzelle gemäß dem Patentanspruch **1** sowie ein Verfahren nach dem Patentanspruch **10** dadurch gelöst, dass die Propagationstestzelle einen Mechanismus zum Einführen eines Nagels in eine benachbarte Batteriezelle sowie integrierte Temperatur- und Druckmessstellen umfasst. Die Intention der Erfindung besteht nunmehr darin, ein Zellmodul testen zu können, wobei der Propagationstest ohne äußere Beschädigung des Zellmoduls initialisiert werden kann. Daraus ergeben sich folgende Vorteile:
- keine äußere mechanische Beanspruchung des Zellmoduls
- keine äußere Abdichtung einer Einstichstelle oder des Zellmoduls notwendig
- Initialisierung des Kurzschlusses innerhalb der Batteriezelle oder des Zellmoduls
- Ausbreitung des thermischen Durchgehens in alle räumlichen Richtungen des Zellmoduls realistisch abbildbar
- messtechnische Erfassung von Temperaturverlauf und mechanischem Druck unmittelbar an der Schadstelle, durch integrierte Temperatur- und Druckmessstellen
- thermisches und mechanisches Verhalten der originalen Batteriezellen innerhalb der Propagationstestzelle abbildbar

Die nachfolgende ausführliche Beschreibung der Erfindung wird durch die Darstellung folgender Abbildungen unterstützt, hierbei zeigen
**FIG. 1A** eine eine einzelne Batteriezelle ersetzende Propagationstestzelle sowie
**FIG. 1B** eine zwei Batteriezellen ersetzende Propagationstestzelle in einem Zellmodul,
**FIG. 2A** den prinzipiellen Aufbau einer Propagationstestzelle in Explosionsansicht sowie
**FIG. 2B** die Bezugsgeometrie der äußeren Formgestalt der Propagationstestzelle.

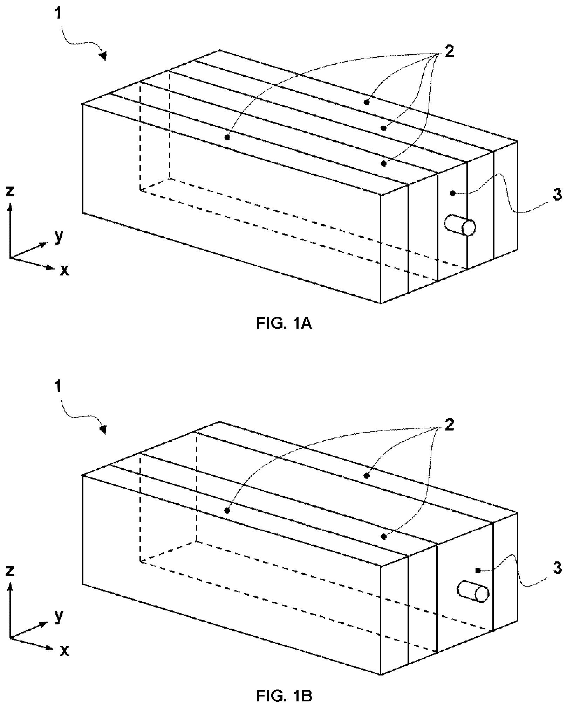

Gemäß **FIG. 1A** und **FIG. 1B** umfasst ein Zellmodul **1** eine Vielzahl an Batteriezellen **2,** welche in bekannter Art und Weise gestapelt angeordnet sowie elektrisch zu einem Batteriepack verschaltet werden können. In vorteilhafter Art und Weise ist nun mindestens eine einzelne von den Batteriezellen **2** innerhalb des Zellmoduls **1** durch eine erfindungsgemäße Propagationstestzelle **3** substituierbar, sodass diese wie eine Dummyzelle zum einen technische Eigenschaften aufweist, auf deren Grundlage die Propagationstestzelle **3** die entsprechenden physikalischen Eigenschaften des gesamten Zellmoduls **1** im Vergleich zu einem Zellmodul **1** ohne Propagationstestzelle **3** nicht oder lediglich geringfügig beeinträchtigt und zum anderen einen Mechanismus zur Initialisierung eines Propagationstests umfasst. Zur Erfüllung dieser technischen Wirkungen weist die erfindungsgemäße Propagationstestzelle **3** Merkmale auf, die im Folgenden detailliert erläutert werden.

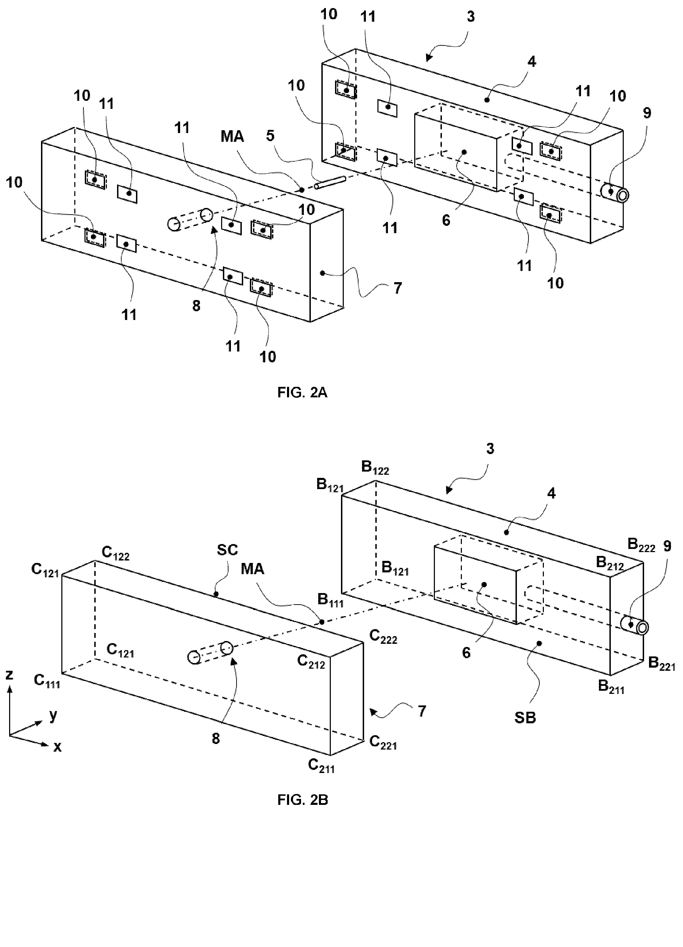

Gemäß **FIG. 2A** umfasst die Propagationstestzelle **3** einen ersten Gehäuseteil **4,** der eine im Wesentlichen quaderförmige äußere Formgestalt aufweist. Die im Wesentlichen quaderförmige äußere Formgestalt bezieht sich auf den vorzugsweisen Anwendungszweck der Propagationstestzelle **3** innerhalb eines Zellmoduls **1,** in welchem einzelne Batteriezellen **2** eine im Wesentlichen quaderförmige Grundgestalt aufweisen, die beispielsweise eine im Wesentlichen quadratische oder rechteckige Grundfläche umfasst. Die exakte geometrische Ausgestaltung der geometrischen Formgestalt oder der Grundfläche der angewendeten Batteriezellen **2** spielt jedoch eine untergeordnete Rolle, da die äußere Formgestalt der erfindungsgemäßen Propagationstestzelle **3** jener der im Anwendungsfall zum Einsatz kommenden weiteren Batteriezellen **2** entsprechen soll. Zur Initialisierung des Propagationstests ist die Formgestalt der weiteren Batteriezellen **2** und somit des ersten Gehäuseteils **4** lediglich insofern von Bedeutung, als dass ein Nagel **5,** betätigt durch einen Vortriebsmechanismus **6,** von der Propagationstestzelle **3** aus in eine benachbarte Batteriezelle **2** eindringt, wobei die genannte benachbarte Batteriezelle **2** mit wenigstens einer Fläche ihrer äußeren Formgestalt in Kontakt mit einer äußeren Fläche der Propagationstestzelle **3** steht oder, dass die entsprechenden Flächen zumindest mit einem geringen Abstand zueinander gegenüberliegend angeordnet sind.

Gemäß **FIG. 2B** lässt sich die räumliche Ausgestaltung der erfindungsgemäßen Propagationstestzelle **3** in einem kartesischen Koordinatensystem (**x, y, z**) darstellen, wobei für den weiteren Verlauf der Beschreibung festgelegt wird, dass die Grundfläche des ersten Gehäuseteils **4** eine im Wesentlichen quadratische oder rechteckige Form umfasst, die zwischen den Eckpunkten **B₁₁₁**, **B₂₁₁**, **B₂₁₂**, **B₁₂₁** aufgespannt wird und somit die Bezugsseite **SB** des ersten Gehäuseteils **4** ausbildet. Die erfindungsgemäße Propagationstestzelle **3** umfasst weiterhin einen zweiten Gehäuseteil **7,** der vorzugsweise ebenfalls eine im Wesentlichen quadratische oder rechteckige Grundfläche aufweist, die insbesondere vorzugsweise der Grundfläche des ersten Gehäuseteils **4** entspricht. Als die Bezugsfläche **SC** des zweiten Gehäuseteils **7** wird zur Unterstützung der nachfolgenden Beschreibung jene Grundfläche definiert, welche zwischen den Eckpunkten **C₁₂₁, C₂₂₁**, **C₂₂₂**, **C₁₂₂** aufgespannt wird. Die Grundfläche des zweiten Gehäuseteils **7** kann jedoch jede weitere Form aufweisen, insofern sie die Abmessungen der Grundfläche des ersten Gehäuseteils **4** nicht übersteigt, sodass die äußere Formgestalt der gesamten Propagationstestzelle **3** weiterhin dem einer oder mehrerer Batteriezellen **2** entspricht oder diese im gesamten durch eine oder mehrere Batteriezellen **2** substituierbar ist.

Der Nagel **5,** welcher im Rahmen eines Propagationstests den inneren Kurzschluss in einer benachbarten Batteriezelle **2** erzeugen soll, umfasst ein elektrisch leifähiges Material und besteht vorzugsweise aus einem unlegierten Stahl. Die spezifischen Abmessungen des Nagels **5** sind generell durch die entsprechenden Prüfnormen oder Bestimmungen zur Durchführung des Propagationstests festgelegt und richten sich zusätzlich nach der äußeren Formgestalt der Batteriezellen **2** des angewendeten Zellmoduls **1.** Entsprechend geltender Normen umfasst der Nagel **5** in einer vorzugsweisen Ausführungsform einen Durchmesser des Schaftes von 1mm bis 20mm, insbesondere vorzugsweise von 3mm bis 8mm und einen konischen Winkel des Schaftendes von vorzugsweise 20° bis 60°. Alternativ kann jede weitere geometrische Abmessung des Nagels **5** angewendet werden, insofern diese eingerichtet ist, um wenigstens je eine Anode und je eine Kathode einer der Propagationstestzelle **3** benachbarten Batteriezelle **2** zu durchdringen oder einen internen Kurzschluss in einer genannten Batteriezelle **2** herzustellen.

Der erste Gehäuseteil **4** der erfindungsgemäßen Propagationstestzelle **3** umfasst wenigstens einen Vortriebsmechanismus **6,** der vollständig oder teilweise im Inneren jenes ersten Gehäuseteils **4** angeordnet und eingerichtet ist, um den Nagel **5** entlang einer Bewegungsachse **MA,** die einer Orthogonalen zur Bezugsfläche des ersten Gehäuseteils **SB** entspricht, zu bewegen, wobei die Bewegung des Nagels **5** vorzugsweise in Richtung des zweiten Gehäuseteils **7** erfolgt. Demzufolge ist der Vortriebsmechanismus **6** eine eigenständige Vorrichtung innerhalb der erfindungsgemäßen Propagationstestzelle **3,** welche die technische Aufgabe erfüllt, den Nagel **5** in die wenigstens eine benachbarte Batteriezelle **2** zu stoßen, sodass wenigstens je eine Anode und je eine Kathode elektrisch überbrückt, jedoch vorzugsweise wenigstens 10 - 90% der Zelldicke durchstoßen werden. Der Vortriebsmechanismus **6** umfasst entsprechend ein in sich vollständig oder teilweise geschlossenes System mit mechanischen, hydraulischen, pneumatischen, elektrischen oder magnetischen Bauelementen. Der detaillierte Aufbau des Vortriebsmechanismus **6** ist nicht Gegenstand der Erfindung, vielmehr liegt die Intention der Erfindung darin, einen entsprechenden Mechanismus in den ersten Gehäuseteil **4** der erfindungsgemäßen Propagationstestzelle **3** zu integrieren. Zur Erfüllung dieser Aufgabe kann der Vortriebsmechanismus **6** in einer Ausführungsform vollständig in den ersten Gehäuseteil **4** integriert sein, vorzugsweise über eine entsprechende Aussparung oder einen Hohlraum im Material des ersten Gehäuseteils **4,** entsprechend beispielsweise der Darstellung in **FIG. 2A****,** wobei die Aussparung als eine quaderförmige Struktur innerhalb des ersten Gehäuseteils **4** schematisch angedeutet wird, welche eine physische Verbindung zur Stirnfläche des ersten Gehäuseteils **4** umfasst. Die Stirnfläche ist in **FIG. 2B** beispielhaft durch die Fläche gegeben, welche durch die Eckpunkte **B₂₁₁, B₂₂₁, B₂₂₂, B₂₁₂** aufgespannt wird.

In einer Ausführungsform umfasst die Propagationstestzelle **3** wenigstens eine Testschnittstelle **9,** die an wenigstens einer Stirnfläche des ersten Gehäuseteils **4** angeordnet ist und eine physische Verbindung zum Vortriebsmechanismus **6** und/oder zu Funktionselementen wie Temperatur- **10** und den Druckmessstellen **11** herstellt, sodass der Vortriebsmechanismus **6** über jene Testschnittstelle **9** aktivierbar ist und/oder elektrische Leitungsverbindungen zu den Temperatur- **10** und den Druckmessstellen **11** nach außen abführbar sind. Die Testschnittstelle **9** erfüllt hierbei im Wesentlichen zwei Funktionen. Zum einen ermöglicht sie die Betätigung des Vortriebsmechanismus **6** und zum anderen können hierüber weitere mechanische oder elektrische Schnittstellen von Funktionselementen, wie beispielsweise genannte Temperatur- **10** und/oder Druckmessstellen **11** zur Prüfungsumgebung hergestellt werden. Die Betätigung des Vortriebsmechanismus **6** kann hierbei mechanisch, hydraulisch, pneumatisch, elektrisch oder magnetisch erfolgen, wodurch die Testschnittstelle **9** demgemäß ausgestaltet sein kann. In einer Ausführungsform, in welcher der Vortriebsmechanismus **6** mechanisch betätigt wird, kann die Testschnittstelle **9** lediglich eine mechanische Aussparung oder Durchgangsbohrung umfassen, die beispielsweise eingerichtet ist, um als mechanische Führung für mechanische Bauelemente zu fungieren, wie Hebel, Gestänge, Übersetzungsmechanismen oder weitere. In einer alternativen Ausführungsform, in welcher der Vortriebsmechanismus **6** hydraulisch oder pneumatisch betätigt wird, kann die Testschnittstelle **9** pneumatische oder hydraulische Rohrleitungen umfassen, um beispielsweise die entsprechenden pneumatischen oder hydraulischen Fluide dem Vortriebsmechanismus **6** zuzuführen. In einer alternativen Ausführungsform, in welcher der Vortriebsmechanismus **6** elektrisch oder magnetisch betätigt wird, kann die Testschnittstelle **9** beispielsweise als Leitungsführung oder direkt in Form von elektrischen Leitungen ausgestaltet sein. Alternativ kann die Testschnittstelle **9** jede weitere Ausgestaltung umfassen, um eine funktionsgerechte Schnittstelle zwischen Prüfungsumgebung und Vortriebsmechanismus **6** herzustellen. Zusätzlich kann die Testschnittstelle **9** weitere Verbindungen genannter Art und Weise umfassen, welche Schnittstellen zwischen der Prüfungsumgebung und den weiteren Funktionselementen wie Temperatur- **10** und/oder Druckmessstellen **11** herzustellen.

Der Nagel **5** ist technisch mit dem Vortriebsmechanismus **6** gekoppelt. Die technische Kopplung zwischen Nagel **5** und Vortriebsmechanismus **6** ist vorzugsweise eine mechanische Verbindung. In einer Ausführungsform ist der Nagel **5** mechanisch mit wenigstens einem Bauelement des Vortriebsmechanismus **6** gekoppelt. In einer alternativen Ausführungsform ist der Nagel **5** mechanisch mit wenigstens einem Adapterbauelement gekoppelt, welches mit wenigstens einem Bauelement des Vortriebsmechanismus **6** mechanisch in Verbindung steht. Generell ist die mechanische Kopplung zwischen Nagel **5** und Vortriebsmechanismus **6** eingerichtet, um den Nagel **5** vor Betätigung des Vortriebsmechanismus **6** vollständig oder teilweise innerhalb des ersten Gehäuseteils **4** zu fixieren und durch die verrichtete Arbeit des betätigten Vortriebsmechanismus **6** auf dessen Bewegungsachse **MA** zu bewegen. Erfindungsgemäß entspricht die Bewegungsachse **MA** einer Orthogonalen zur Bezugsfläche **SB** des ersten Gehäuseteils **4,** durch welche der Nagel **5** in genannter Orthogonalenrichtung von der Bezugsfläche **SB** weg und in Richtung der entsprechenden Oberfläche der wenigstens einen benachbarten Batteriezelle **2** hin bewegt wird, sodass der Eintrittswinkel des Nagels in die benachbarte Batteriezelle **2** in vorteilhafter Art und Weise senkrecht ist, sodass aus der kinetischen Energie des Nagels **5** heraus der größtmögliche Druck auf die benachbarte Batteriezelle **2** ausgeübt und gleichzeitig dessen Bewegungsbahn nach Eindringen in die genannte Batteriezelle **2** stabilisiert wird.

In einer Ausführungsform umfasst der Vortriebsmechanismus **6,** der innerhalb einer Aussparung des ersten Gehäuseteils **4** angeordnet ist, eine Öffnung zur Oberfläche des ersten Gehäuseteils **4,** vorzugsweise an dessen Bezugsfläche **SB,** deren flächenmäßige Abmessungen mindestens größer als die der Querschnittsfläche des Nagels **5** sind, sodass der genannte Nagel **5,** aufgrund der Betätigung des Vortriebsmechanismus **6** und in seiner Bewegung auf der Bewegungsachse **MA,** die genannte Öffnung ungehindert passieren kann. In einer Ausführungsform, in welcher der Vortriebsmechanismus **6** eine mechanische Betätigung umfasst, kann die Öffnung zur Bezugsfläche **SB** des ersten Gehäuseteils **4** Abmessungen umfassen, die ausgestaltet sind, um mechanische Bauelemente des Vortriebsmechanismus **6** vollständig oder teilweise aus der entsprechenden Aussparung innerhalb des ersten Gehäuseteils **4** herauszubewegen, sodass der Nagel **5** auf der Bewegungsachse **MA** bewegbar angeordnet ist. In einer Ausführungsform, in welcher der Vortriebsmechanismus **6** hydraulisch oder pneumatisch aktivierbar angeordnet ist, kann die Öffnung zur Bezugsfläche **SB** des ersten Gehäuseteils **4** Abmessungen umfassen, die ausgestaltet sind, um die Aussparung des Vortriebsmechanismus **6** gegenüber der Umgebung gegen Austreten des hydraulischen oder pneumatischen Fluides abzudichten, beispielsweise über eine entsprechende Passung und zusätzliche Dichtungselemente, zum Abdichten der Zellwand der benachbarten Batteriezelle **2** gegen Austritt von sich infolge des thermischen Durchgehens entwickelnden Reaktionsgasen. Alternativ kann die Öffnung Führungselemente umfassen, die eingerichtet sind, den Nagel **5** in seiner Bewegung auf der Bewegungsachse **MA** zu unterstützen und/oder zu führen, beispielsweise über eine entsprechende Passung.

Alternativ und erfindungsgemäß vorteilhaft bezüglich der Gewährleistung einer unbeeinträchtigten Bewegung des Nagels **5** auf der Bewegungsachse **MA** umfasst der zweite Gehäuseteil **7** einen Durchgang, in der Ausgestaltung einer Durchgangsbohrung **8,** die eingerichtet ist, um eine Bewegung des Nagels **5** aus dem Inneren des Vortriebsmechanismus **6** und somit des ersten Gehäuseteils **4** heraus in wenigstens eine benachbarte Batteriezelle **2** zu ermöglichen. Der Durchmesser der Durchgangsbohrung **8** ist entsprechend mindestens größer als der Durchmesser des Schaftes oder des Teils des Nagels **5,** welcher den zweiten Gehäuseteil **7** passiert. In einer vorteilhaften Ausführungsform umfasst die Durchgangsbohrung **8** eine entsprechende Passung, sodass der Nagel **5** oder der Teil von diesem, welcher die Durchgangsbohrung **8** passiert, in seiner Bewegung geführt wird. In einer alternativen vorteilhaften Ausführung umfasst der zweite Gehäuseteil **7** weitere Elemente, welche eine genannte Passung aufweisen und die Führung des Nagels **5** in seiner Bewegung auf der Bewegungsachse **MA** zusätzlich unterstützen. Alternativ ist jede weitere Ausgestaltung der Durchgangsbohrung **8** anwendbar, insofern der Nagel **5** diese ungehindert in seiner Bewegung auf der Bewegungsachse **MA** passieren kann. Der Nagel **5** umfasst entsprechend mindestens eine Länge der Summe aus der Breite des zweiten Gehäuseteils **7,** welche die Ausbreitung in y-Richtung gemäß **FIG. 2B** umfasst, sowie einer erforderlichen Mindesteindringtiefe in die benachbarte Batteriezelle **2.** Die erforderliche Mindesteindringtiefe ergibt sich aus den angewendeten Testparametern und kann sich entsprechend von vorzugsweise 10 - 90% der Zelldicke der benachbarten Batteriezelle **2** bis zu einem Vielfachen der genannten Zelldicke erstrecken. Gleichermaßen umfasst der Vortriebsmechanismus **6** Abmessungen und Komponenten, die eingerichtet sind, um den Nagel **5** in einem Hub zu bewegen, der mindestens der geforderten Eindringtiefe entspricht.

Erfindungsgemäß vorteilhaft erfüllt die Propagationstestzelle **3** nicht nur den Zweck, den Vortriebsmechanismus **6** auszuführen und somit ein thermisches Durchdringen durch Dendritbildung in wenigstens einer benachbarten Batteriezelle **2** eines Zellmoduls **1** zu initialisieren, sondern umfasst zusätzlich physikalische Eigenschaften, durch welche die Folgen der Ausbreitung des thermischen Durchgehens in der genannten benachbarten Batteriezelle **2** auf weitere umliegende Batteriezellen **2** nachempfunden werden kann. Zu diesem Zwecke können der erste Gehäuseteil **4** und der zweite Gehäuseteil **7** Materialien umfassen, durch deren Kombination die Propagationstestzelle **3** insgesamt der thermischen und elektrischen Leitfähigkeit der weiteren Batteriezellen **2** nachempfindbar ist. Die physikalischen Zieleigenschaften können hierbei insbesondere die Wärmeleitfähigkeit, die Wärmekapazität, die elektrische Leitfähigkeit und das Elastizitätsmodul sowie weitere physikalische Eigenschaften sein. Generell können erster Gehäuseteil **4** und zweiter Gehäuseteil **7** vorzugsweise Metalle und Metallverbindungen, Kunststoffe und spezielle Polymere sowie Faserverbundwerkstoffe als Materialien umfassen. In einer vorteilhaften Ausführungsform umfassen erster Gehäuseteil **4** und zweiter Gehäuseteil **7** vorzugsweise Materialien, welche durch extrudierende Fertigungsverfahren wie 3D-Druck oder Rapidprototyping herstellbar sind. Auf diese Art und Weise ist die Propagationstestzelle **3** mobil herstellbar und kann kurzfristig auf abweichende geometrische und/oder physikalische Anforderungen angepasst werden. In einer vorteilhaften Ausführungsform kann der erste Gehäuseteil **4** und/oder der zweite Gehäuseteil **7** mittels Metall-3D-Druck, insbesondere Aluminiumdruck, herstellbar sein. Generell können erster Gehäuseteil **4** und zweiter Gehäuseteil **7** Werkstoffpaarungen umfassen, welche die genannten physikalischen Eigenschaften der gesamten Propagationstestzelle **3** in anforderungsgerechter Art und Weise nachempfinden. In einer vorteilhaften Ausführungsform umfasst der zweite Gehäuseteil **7** Materialien, die elektrisch isolierende Eigenschaften aufweisen, um den ersten Gehäuseteil **4** der Propagationstestzelle **3** und insbesondere den Nagel **5** des Vortriebsmechanismus **6** elektrisch gegenüber der wenigstens einen benachbarten Batteriezelle **2** zu isolieren. Dies kann beispielsweise über eine zusätzliche Folierung von wenigstens den der Bezugsflächen (**SB, SC**) gegenüberliegenden Grundflächen der beiden Gehäuseteile (**4, 7**) erfolgen. Zusätzlich kann eine Paarung, bestehend aus einem ersten Gehäuseteil **4** und einem zweiten Gehäuseteil **7** eine mechanische und/oder chemische oder jede weitere Verbindung umfassen, um beide genannten Komponenten miteinander zu koppeln. In einer Ausführungsform ist die flächenmäßige Ausdehnung der Bezugsfläche **SC** des zweiten Gehäuseteils **7** mindestens größer als jene flächenmäßige Ausdehnung der Öffnung zur Bezugsfläche **SB** des ersten Gehäuseteils **4,** sodass jene Öffnung durch den mit der Bezugsfläche **SB** des ersten Gehäuseteils **4** in Kontakt stehenden zweiten Gehäuseteil **7** vollständig verschließbar ist, mit Ausnahme der Durchgangsbohrung **8.** Wobei die Durchgangsbohrung **8** vor Betätigung des Vortriebsmechanismus **6** zunächst ebenfalls vollständig oder teilweise offen oder verschlossen sein kann, wobei der vollständig oder teilweise verschlossene Zustand vorzugsweise durch die Folierung oder weitere Dichtungselemente, zum Abdichten gegen Reaktionsgase, herstellbar ist. Alternativ kann die Durchgangsbohrung **8** vor Betätigung des Vortriebsmechanismus **6** durch weitere Elemente verschlossen sein, sodass diese durch Betätigung des Vortriebsmechanismus **6** und/oder durch Durchstoßen des Nagels durch den entsprechenden Verschluss geöffnet wird.

In einer Ausführungsform umfassen die Abmessungen der äußeren Formgestalt der Propagationstestzelle **3** in sämtlichen räumlichen Richtungen ein Vielfaches der entsprechenden jeweiligen Abmessungen der Batteriezelle **2,** mit welcher die genannte Propagationstestzelle **3** innerhalb eines Zellmoduls **1** angeordnet sein kann. In einer vorteilhaften Ausführungsform umfasst wenigstens eine Abmessung der äußeren Formgestalt der Propagationstestzelle **3,** vorzugsweise die Breitenausdehnung, ein Vielfaches der entsprechenden Abmessung der Batteriezelle **2,** mit welcher die Propagationstestzelle **3** innerhalb eines Zellmoduls **1** angeordnet sein kann, wobei, die restlichen Abmessungen der Propagationstestzelle **3** jener Batteriezelle **2** gleichen, sodass die Propagationstestzelle **3** mit wenigstens einer weiteren Batteriezelle **2** oder einem Vielfachen davon innerhalb eines Zellmoduls **1** substituierbar ist. In einer vorzugsweisen Ausführungsform entsprechen genannte Vielfache der räumlichen Abmessungen ganzzahligen Vielfachen, sodass die erfindungsgemäße Propagationstestzelle **3** ganzzahlige Vielfache der Batteriezellen **2** ersetzen kann. Die Breitenausdehnung der Propagationstestzelle **3** entspricht gemäß **FIG. 2B** der y-Richtung des angedeuteten kartesischen Koordinatensystems (**x, y, z**). Erfindungsgemäß ist der Vortriebsmechanismus **6** der Propagationstestzelle **3** eingerichtet, um den Nagel **5** in wenigstens eine benachbarte Batteriezelle **2** eines Zellmoduls **1** einzuführen. Je nach geometrischer Ausgestaltung der Batteriezellen **2** oder des gesamten Zellmoduls **1** oder den Anforderungen des durchzuführenden Propagationstests, wie Eindringung oder Durchdringung, oder mit anderen Worten dem Verhältnis der notwendigen Eindringtiefe des Nagels **5** zur Breitenausdehnung der weiteren Batteriezellen **2,** kann es erforderlich sein, dass der Nagel **5** eine minimale Längenausdehnung aufweist, welche größer als die einfache Breitenausdehnung einer der weiteren Batteriezellen **2** ist. Für diesen Spezialfall kann der erste Gehäuseteil **4** eine vergrößerte Breitenausdehnung umfassen, sodass die gesamte Propagationstestzelle **3** ein Vielfaches einer benachbarten Batteriezelle **2** umfasst. Auf diese vorteilhafte Art und Weise können mehrere Batteriezellen **2** durch die Propagationstestzelle **3** substituiert werden. Gemäß diesem Merkmal kann die Längsausdehnung des Nagels **5** erfindungsgemäß vorteilhaft eine beliebige Abmessung, im Verhältnis zum restlichen Prüfaufbau, umfassen.

In einer vorteilhaften Ausführungsform umfasst die Propagationstestzelle **3** wenigstens eine Temperatur- **10** und/oder wenigstens eine Druckmessstelle **11.** Durch die Anwendung von Temperatur- **10** und Druckmessstellen **11** sind der Temperaturverlauf sowie die mechanische Beanspruchung der Propagationstestzelle **3** und damit die Lastveränderung im gesamten Zellmodul **1** während des Propagationstests und in unmittelbarer Nähe der Schadstelle des Kurzschlusses ermittelbar. In einer vorteilhaften Ausführungsform, in welcher innerhalb der Propagationstestzelle **3** mehrere Temperatur- **10** und/oder Druckmessstellen **11** angeordnet sind, ist der Temperaturverlauf sowie die mechanische Beanspruchung während des Propagationstests an mehreren Positionen innerhalb der Propagationstestzelle **3** messbar, wodurch die physikalischen Auswirkungen der Propagation der wenigstens einen benachbarten Batteriezelle **2** und dem gesamten Zellmodul exakter abbildbar sind. In einer Ausführungsform sind die Temperatur- **10** und Druckmessstellen **11** auf den Oberflächen, insbesondere auf den Bezugsflächen (**SB, SC**) des ersten und zweiten Gehäuseteils (**4, 7**) angeordnet. In einer Ausführungsform, in welcher der zweite Gehäuseteil **7** elektrisch isolierende Eigenschaften gegenüber der wenigstens einen benachbarten Batteriezelle **2** aufweist, sind die Temperatur-**10** und Druckmessstellen **11** auf diese Art und Weise ebenfalls von jener elektrisch isoliert und gleichzeitig in unmittelbarer Nähe zur Oberfläche der benachbarten Batteriezelle **2** angeordnet. In einer alternativen vorteilhaften Ausführungsform sind die Temperatur- **10** und Druckmessstellen **11** innerhalb des ersten Gehäuseteils **4** und/oder des zweiten Gehäuseteils **7** angeordnet. Hierzu können beispielsweise während der Fertigung weitere Aussparungen im Material der beiden Gehäuseteile (**4, 7**) vorgesehen werden. Diese Aussparungen können weiterhin eine physische Verbindung zu den Oberflächen umfassen, sodass die entsprechenden Temperatur- **10** und Druckmessstellen **11** an die jeweiligen Positionen angeordnet werden können. Der zweite Gehäuseteil **7** kann hierzu zusätzlich entsprechende Auswölbungen auf der Bezugsfläche **SC** umfassen, welche vollständig oder teilweise in die zugehörigen Aussparungen der Temperatur- **10** und Druckmessstellen **11** des ersten Gehäuseteils **4** hineinragen, sodass die genannten Messstellen fixiert und geschützt/isoliert sind.

Ferner umfasst die Erfindung ein Verfahren zum Durchführen eines Propagationstests bei einem Zellmodul **1,** umfassend wenigstens zwei Batteriezellen **2,** umfassend das Substituieren von wenigstens einer der Batteriezellen **2** mit einer erfindungsgemäßen Propagationstestzelle **3** in einem ersten Schritt **S1.** In einer Ausführungsform, in welcher ein anwendungsgemäßer Propagationstest durch Überbrücken von wenigstens einer Kathode und einer Anode einer Batteriezelle **2** initialisiert wird, muss ein entsprechender Nagel **5** in einer geforderten Tiefe in die entsprechende Batteriezelle **2** eindringen, sodass eine einzelne Propagationstestzelle **3** die gleichen Abmessungen wie eine der weiteren Batteriezellen **2** aufweist, wobei genügend Raum für einen erfindungsgemäßen Vortriebsmechanismus **6** im ersten Gehäuseteil **4** vorhanden ist. Demnach ist es ausreichend, wenn genau eine Batteriezelle **2** durch die erfindungsgemäße Propagationstestzelle **3** ausgetauscht wird. In einer Ausführungsform, in welcher zur Durchführung eines anwendungsgemäßen Propagationstests die vollständige Durchdringung einer Batteriezelle **2** erforderlich ist, kann die erfindungsgemäße Propagationstestzelle **3** ein ganzzahliges Vielfaches, jedoch mindestens das Doppelte, der Breitenausdehnung der Batteriezelle **2** umfassen, sodass der erste Gehäuseteil **4** genügend Raum aufweist, um einen erfindungsgemäßen Vortriebsmechanismus **6** anordnen zu können, der eingerichtet ist, um einen entsprechend erforderlichen langen Nagel **5** zu fixieren.

In einem zweiten Schritt **S2** erfolgt die physische und elektrische Integration der Propagationstestzelle **3** innerhalb des Zellmoduls **1,** wobei diese auf die gleiche Art und Weise wie die weiteren Batteriezellen **2** innerhalb des Zellmoduls **1** positioniert und fixiert wird, wobei die Propagationstestzelle **3** auf die gleiche Art und Weise wie die weiteren Batteriezellen **2** innerhalb des Zellmoduls **1** elektrisch verschaltet oder entsprechend überbrückt werden kann, sodass der Stromkreislauf des Akkumulators nicht unterbrochen wird. In einem weiteren Schritt **S3** erfolgt die Vernetzung der Temperatur- **10** und Druckmessstellen **11** mit dem weiteren Prüfaufbau, wobei die elektrische Verkabelung der genannten Messstellen, die aus einer oder mehreren Testschnittstellen **9** geführt werden, mit Messtechnik verbunden werden kann. In einem weiteren Schritt **S4** erfolgt die Vorbereitung des Zellmoduls **1,** wobei der Akkumulator elektrisch geladen und/oder auf dessen Funktionstüchtigkeit innerhalb des Prüfaufbaus geprüft wird. In einem weiteren Schritt **S5** wird die messtechnische Erfassung der Messparameter wie elektrische Spannung, Temperatur, Druck über Zeit und weiterer Parameter, welche sich anwendungsgemäß aus Testparametern ergeben, eingeleitet und anschließend wird in einem letzten Schritt **S6** die Initialisierung des Propagationstests durch Betätigung des Vortriebsmechanismus **6** der Propagationstestzelle **3** ausgeführt.

### Ausführungsbeispiele

Nachfolgend werden Ausführungsbeispiele der beschriebenen Ausführungsformen aufgezeigt. Weitere Besonderheiten und Vorteile ergeben sich zusätzlich aus den unterstützenden Schaubildern, hierbei zeigen:

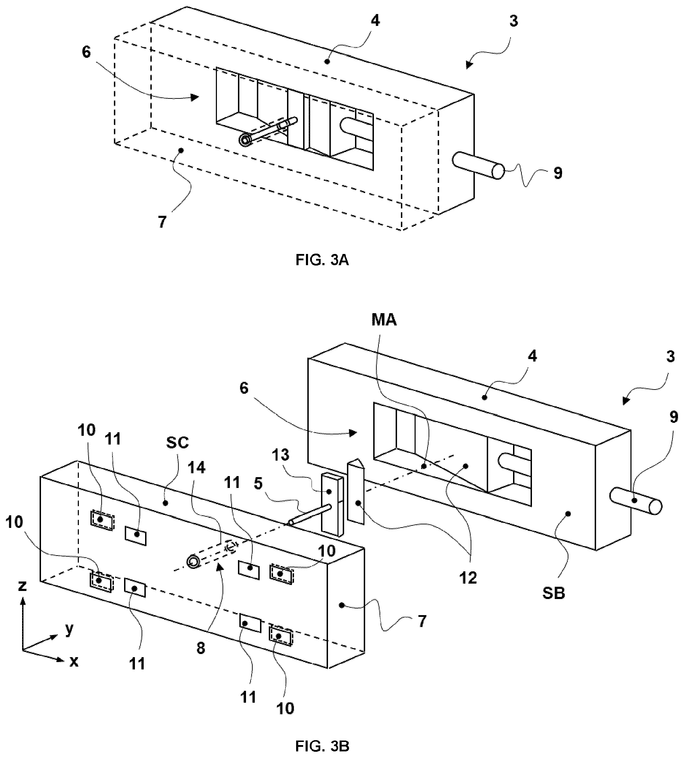

**FIG. 3A** eine mechanisch aktivierbare Propagationstestzelle,
**FIG. 3B** die Explosionsdarstellung der mechanisch aktivierbaren Propagationstestzelle,

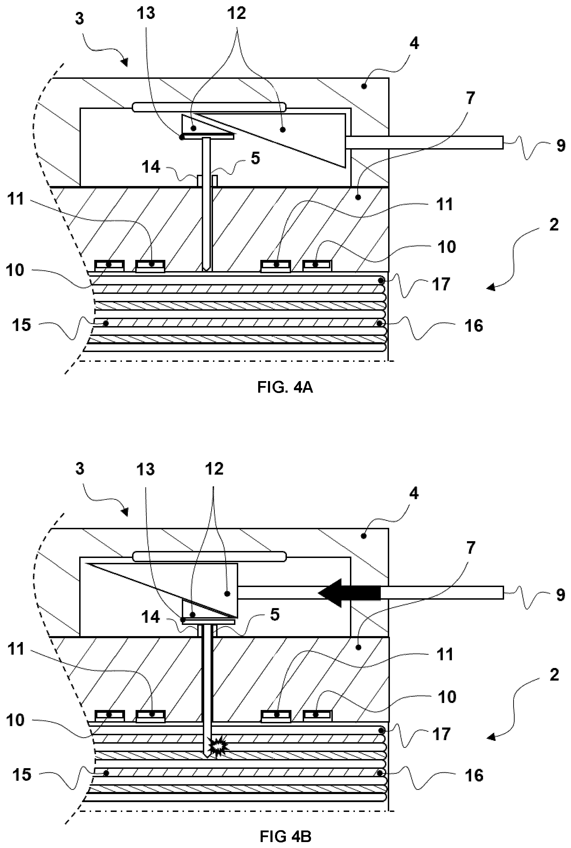

**FIG. 4A** die Schnittansicht der mechanisch aktivierbaren Propagationstestzelle,
**FIG. 4B** die Schnittansicht der mechanisch aktivierten Propagationstestzelle sowie

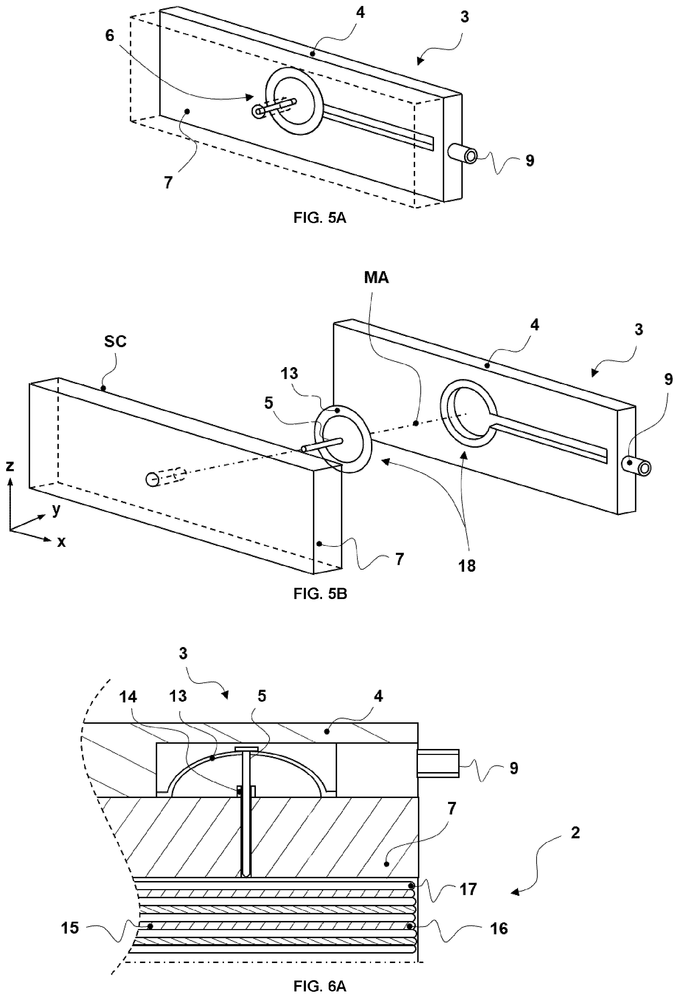

**FIG. 5A** eine pneumatisch aktivierbare Propagationstestzelle,
**FIG. 5B** die Explosionsdarstellung einer pneumatisch aktivierbaren Propagationstestzelle,
**FIG. 6A** die Schnittansicht der pneumatisch aktivierbaren Propagationstestzelle,

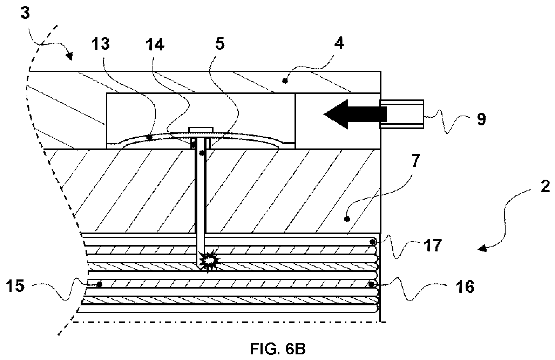

**FIG. 6B** die Schnittansicht der pneumatisch aktivierten Propagationstestzelle.

In **FIG. 3A** und **FIG. 3B** ist eine beispielhafte Ausführungsform einer Propagationstestzelle **3** mit mechanisch aktivierbarem Vortriebsmechanismus **12** veranschaulicht. Der erste Gehäuseteil **4** umfasst eine im Wesentlichen quaderförmige Formgestalt, wobei der zweite Gehäuseteil **7** die gleiche flächenmäßige Ausdehnung von dessen Bezugsfläche **SC** wie die Bezugsfläche **SB** des ersten Gehäuseteils **4** umfasst. Die äußeren Abmessungen der gesamten Propagationstestzelle **3** gleichen denen einer einzelnen von weiteren Batteriezellen **2** eines Zellmoduls **1,** in welcher die Propagationstestzelle **3** demnach genau anstelle einer einzelnen Batteriezelle **2** ersetzbar ist, wie in **FIG. 1A** angedeutet. Der Vortriebsmechanismus **6** umfasst eine quaderförmige Aussparung innerhalb des ersten Gehäuseteils **4** mit Öffnung zur Oberfläche der Bezugsfläche **SB** sowie eine zylinderförmige mechanische Verbindung zu einer Stirnfläche, durch welche eine Testschnittstelle **9** ausgebildet ist. Der mechanische Vortriebsmechanismus **12** ist hierbei lediglich beispielhaft und schematisch angedeutet, wobei die dargestellte Mechanik weder den Anspruch auf Vollständigkeit hat, noch die Ausführungsform limitieren soll. So ist der mechanische Vortriebsmechanismus **12** beispielhaft durch das Prinzip der schiefen Ebene realisiert, wobei ein erster Schieber innerhalb der Aussparung des Vortriebsmechanismus **6** in x-Richtung bewegbar gelagert ist und eine mechanische Verbindung zu einer Art Koppelstange der Testschnittstelle **9** umfasst. Die Testschnittstelle **9** entspricht hierbei einer mechanischen Führung genannter Koppelstange, die auf diese Art und Weise von außerhalb der Propagationstestzelle **3** und des Zellmoduls **1** bewegbar ist. Als Gegenstück zu genanntem ersten Schieber ist ein weiterer Schieber gegenseitig angeordnet, welcher mechanisch mit einem Nagelführungsadapter **13** gekoppelt ist, an welchem der Nagel **5** angeordnet ist. In einer Ausführungsform umfasst der Nagelführungsadapter **13** ein elektrisch isolierendes Material, sodass der Nagel **5** von den weiteren Bauelementen des mechanischen Vortriebsmechanismus **12** sowie der Propagationstestzelle **3** elektrisch isoliert ist. Die exakte Ausgestaltung des mechanischen Vortriebsmechanismus **12,** der Anzahl, Art und Lagerung von dessen Bauelementen sowie die Art und Ausgestaltung sämtlicher mechanischer Verbindungen sind nicht Gegenstand der Erfindung, wobei die rein schematische Darstellung der beschriebenen Mechanik verdeutlicht werden soll.

Zur Aufnahme und Führung des Nagels **5** in seiner Bewegung auf der Bewegungsachse **MA** umfasst der zweite Gehäuseteil **7** eine entsprechende Durchgangsbohrung **8** sowie zusätzlich eine Nagelführungspassung **14,** die hier in beispielhafter Art und Weise als ein auf die Bezugsfläche **SB** des zweiten Gehäuseteils **7** angeordneter Hohlzylinder mit in seiner Längsachse fluchtender Position zur Durchgangsbohrung sowie zur Bewegungsachse **MA** angeordnet ist. In einer vorteilhaften Ausführungsform umfasst der Innendurchmesser der Durchgangsbohrung der Nagelführungspassung **14** eine Spielpassung, die dem Durchmesser des Schaftes des Nagels **5** entspricht, sodass dieser durch die Nagelführungspassung **14** in seiner Bewegung auf der Bewegungsachse **MA** geführt wird. In einer Ausführungsform kann der zweite Gehäuseteil **7** und/oder die Nagelführungspassung **14** ein elektrisch isolierendes Material umfassen, um die elektrische Isolation des Nagels **5** gegenüber den weiteren Komponenten der Propagationstestzelle **3** zu vervollständigen. Zusätzlich umfasst der zweite Gehäuseteil **7** eine Folierung, welche sich flächenmäßig mindestens über die mit der benachbarten Batteriezelle **2** in Kontakt stehende Fläche des zweiten Gehäuseteils **7** ausdehnt und elektrisch isolierende sowie abdichtende Eigenschaften aufweist, sodass beim Eindringen des Nagels **5** in die genannte Batteriezelle **2** diese ebenfalls gegenüber sich bildenden Reaktionsgasen abgedichtet wird.

Die Aktivierung des mechanischen Vortriebsmechanismus **12** sowie die Initialisierung des Propagationstests erfolgt durch mechanische Betätigung der angedeuteten Koppelstange über die Testzellenschnittstelle **9,** welche hierbei lediglich als mechanische Führung der genannten Koppelstange ausgebildet ist, sodass der erste Schieber entlang der x-Achse in Richtung der der Testzellenschnittstelle **9** gegenüberliegenden Stirnfläche geschoben wird. Entsprechend der Bewegung des ersten Schiebers wird der zweite Schieber, welcher zum ersten Schieber gegengerichtet ist, in y-Richtung, in Richtung des zweiten Gehäuseteils **7** verschoben, wodurch der Nagel **5,** der über den Nagelführungsadapter **13** mit dem zweiten Schieber mechanisch gekoppelt ist, auf der Bewegungsachse **MA** bewegt wird.

In einer Ausführungsform, wobei der Vortriebsmechanismus **6** einer erfindungsgemäßen Propagationstestzelle **3** mechanisch aktivierbar sowie die Testzellenschnittstelle **9** lediglich als mechanische Führung für Bauelemente des mechanischen Vortriebsmechanismus **12** ausgebildet ist, können elektrische Verbindungen zu Temperatur- **10** und Druckmessstellen **11,** welche innerhalb des zweiten Gehäuseteils **7** angeordnet sind, beispielsweise an der der Testschnittstelle **9** gegenüberliegenden Stirnseite des ersten Gehäuseteils **4** und/oder des zweiten Gehäuseteils **7** nach außen geführt werden. Gemäß der Schnittansicht einer Propagationstestzelle **3** mit mechanischem Vortriebsmechanismus **12** und einer benachbarten Batteriezelle **2,** gemäß **FIG. 4A** und **FIG. 4B** erfolgt die beschriebene Aktivierung des Vortriebsmechanismus **6** durch Bewegung der Koppelstange der Testzellenschnittstelle **9** in Pfeilrichtung, wobei der Nagel **5** aufgrund der Bewegung des Nagelführungsadapters **13** durch die gasabgedichtete der Nagelführungspassung **14** des zweiten Gehäuseteils **7** geführt wird und in die benachbarte Batteriezelle **2** eindringt. Beim Eindringen des Nagels **5** in die benachbarte Batteriezelle **2** durchdringt dieser aufgrund seiner Längsausdehnung wenigstens je eine Schicht der Anode **15,** der Kathode **16** sowie des Separators **17,** wodurch erfindungsgemäß ein Kurzschluss zwischen Anode **15** und Kathode **16** der Batteriezelle **2** ausgelöst und das thermische Durchgehen initialisiert wird.

In **FIG. 5A** und **FIG. 5B** ist eine beispielhafte Ausführungsform einer Propagationstestzelle **3** mit pneumatisch aktivierbarem Vortriebsmechanismus **18** veranschaulicht. Der erste Gehäuseteil **4** umfasst eine im Wesentlichen quaderförmige Formgestalt, wobei der zweite Gehäuseteil **7** die gleiche flächenmäßige Ausdehnung von dessen Bezugsfläche **SC** wie die Bezugsfläche **SB** des ersten Gehäuseteils **4** umfasst. Die äußeren Abmessungen der gesamten Propagationstestzelle **3** gleichen denen einer einzelnen von weiteren Batteriezellen **2** eines Zellmoduls **1,** in welcher die Propagationstestzelle **3** demnach genau anstelle einer einzelnen Batteriezelle **2** ersetzbar ist, wie in **FIG. 1A** angedeutet. Der Vortriebsmechanismus **6** umfasst eine Aussparung innerhalb des ersten Gehäuseteils **4** mit Öffnung zur Oberfläche der Bezugsfläche **SB** sowie eine Verbindung zu einer Stirnfläche, an welche sich eine Testschnittstelle **9** anschließt. Der pneumatische Vortriebsmechanismus **18** ist hierbei lediglich beispielhaft und schematisch angedeutet, wobei die dargestellte Mechanik weder den Anspruch auf Vollständigkeit hat, noch die Ausführungsform limitieren soll. So ist der pneumatische Vortriebsmechanismus **18** beispielhaft durch das Prinzip einer pneumatischen Feder mittels Druckmembran realisiert, wobei die Aussparung des Vortriebsmechanismus **6** über den Nagelführungsadapter **13** in Ausgestaltung einer Druckmembran sowie die Aussparung zur Verbindung mit der Testzellenschnittstelle **9** über den zweiten Gehäuseteil **7** abgedichtet ist. Hierfür können weitere Dichtelemente innerhalb des pneumatischen Vortriebsmechanismus **18** sowie an dem zweiten Gehäuseteil **7** angeordnet sein. In einer Ausführungsform umfasst der Nagelführungsadapter **13** ein elektrisch isolierendes Material, sodass der Nagel **5** von den weiteren Bauelementen des pneumatischen Vortriebsmechanismus **18** sowie der Propagationstestzelle **3** elektrisch isoliert ist. Die exakte Ausgestaltung des pneumatischen Vortriebsmechanismus **18,** der Anzahl, Art und Lagerung von dessen Bau- und Dichtungselementen sowie die Art und Ausgestaltung sämtlicher Versorgungseinrichtungen bezüglich des pneumatischen Fluides sind nicht Gegenstand der Erfindung, wobei die rein schematische Darstellung der beschriebenen Mechanik verdeutlicht werden soll.

Gemäß **FIG. 6A** umfasst der zweite Gehäuseteil **7** zur Aufnahme und Führung des Nagels **5** in seiner Bewegung auf der Bewegungsachse **MA** eine entsprechende Durchgangsbohrung **8** sowie zusätzlich eine Nagelführungspassung **14,** die hier in beispielhafter Art und Weise als ein auf die Bezugsfläche **SB** des zweiten Gehäuseteils **7** angeordneter Hohlzylinder mit in seiner Längsachse fluchtender Position zur Durchgangsbohrung sowie zur Bewegungsachse **MA** angeordnet ist. In einer vorteilhaften Ausführungsform umfasst der Innendurchmesser der Durchgangsbohrung der Nagelführungspassung **14** eine Spielpassung, die dem Durchmesser des Schaftes des Nagels **5** entspricht, sodass dieser durch die gasabgedichtete Nagelführungspassung **14** in seiner Bewegung auf der Bewegungsachse **MA** geführt wird. In einer Ausführungsform kann der zweite Gehäuseteil **7** und/oder die Nagelführungspassung **14** ein elektrisch isolierendes sowie pneumatisch abdichtendes Material umfassen, um die elektrische Isolation des Nagels **5** gegenüber den weiteren Komponenten der Propagationstestzelle **3** sowie die Abdichtung des gesamten pneumatischen Vortriebsmechanismus **18** gegenüber dem weiteren Prüfaufbau zu vervollständigen.

Gemäß **FIG. 6B** erfolgt die Aktivierung des pneumatischen Vortriebsmechanismus **18** sowie die Initialisierung des Propagationstests durch pneumatische Betätigung über die angedeutete Testzellenschnittstelle **9,** welche hierbei lediglich als pneumatische Rohrleitung ausgebildet ist, sodass das pneumatische Fluid in Pfeilrichtung in den Hohlraum der Aussparung des mechanischen Vortriebsmechanismus **12** eingelassen wird. Entsprechend dem Druckaufbau innerhalb des genannten Hohlraumes auf der Innenseite des als Druckmembran ausgebildeten Nagelführungsadapters **13** wird die entsprechende Druckmembran in Richtung des zweiten Gehäuseteils **7** ausgedehnt, wodurch der Nagel **5,** der mit dem Nagelführungsadapter **13** mechanisch gekoppelt ist, auf der Bewegungsachse **MA** bewegt wird. Beim Eindringen des Nagels **5** in die benachbarte Batteriezelle **2** durchdringt dieser aufgrund seiner Längsausdehnung wenigstens je eine Schicht der Anode **15,** der Kathode **16** sowie des Separators **17,** wodurch erfindungsgemäß ein Kurzschluss zwischen Anode **15** und Kathode **16** der Batteriezelle **2** ausgelöst und das thermische Durchgehen initialisiert wird. In einer Ausführungsform, wobei der Vortriebsmechanismus **6** einer erfindungsgemäßen Propagationstestzelle **3** pneumatisch aktivierbar sowie die Testzellenschnittstelle **9** lediglich als pneumatische Rohrleitung des pneumatischen Vortriebsmechanismus **18** ausgebildet ist, können elektrische Verbindungen zu Temperatur- **10** und Druckmessstellen **11,** welche innerhalb des zweiten Gehäuseteils **7** angeordnet sind, beispielsweise an der der Testschnittstelle **9** gegenüberliegenden Stirnseite des ersten Gehäuseteils **4** und/oder des zweiten Gehäuseteils **7** nach außen geführt werden.

Die unterschiedlichen Betätigungsarten des Vortriebsmechanismus **6** der erfindungsgemäßen Propagationstestzelle **3,** die beispielsweise als hydraulisch oder pneumatisch, mechanisch, elektrisch oder magnetisch oder auf weitere Art und Weise aktivierbar ausgestaltet sein können, unterliegen anwendungsbezogenen Vor- und Nachteilen. So ist ein mechanischer Vortriebsmechanismus **12,** der beispielsweise über das Prinzip der schiefen Ebene, einer mechanischen Feder, einer Getriebe- oder Hebelübersetzung oder auf weitere Art und Weise realisierbar ist, durch einfachen Aufbau sowie elektrische Isolation mittels Auswahl geeigneter Materialien gekennzeichnet, erfordert jedoch weitere Peripherie, um die mechanische Betätigung von außen zu gewährleisten. Hydraulische und pneumatische Betätigungsarten hingegen weisen ebenfalls einen einfachen Aufbau auf, erfordern jedoch zusätzliche Bauelemente und Überlegungen zur Abdichtung des gesamten hydraulischen oder pneumatischen Vortriebsmechanismus **18** gegenüber dem weiteren Prüfaufbau sowie bezüglich der elektrischen Isolation. Austretende Fluide könnten beispielsweise die Messergebnisse durch die Temperatur- **10** und Druckmessstellen **11** beeinträchtigen. Elektrische und elektromagnetische Betätigungsarten können hingegen eine effektive Betätigung des gesamten Vortriebsmechanismus **6** gewährleisten, wobei jedoch das Einbringen von weiterer elektrischer Peripherie ebenfalls Auswirkungen auf den gesamten Propagationstest haben könnte.

Unter Berücksichtigung des entsprechenden Anwendungsfalls ist die erfindungsgemäße Propagationstestzelle **3** jedoch in vorteilhafter Art und Weise modularisierbar. So können beispielsweise die verschiedenen Betätigungsarten in Abhängigkeit verschiedener Längen des Nagels **5** als eigenständige Module vorgefertigt werden, die durch entsprechend vorgesehene Aussparungen in den beiden Gehäuseteilen (**4, 7**), die ebenfalls in verschiedenen standardisierten geometrischen Abmessungen vorgefertigt werden können, in diese integrierbar sind. Alternativ können erster Gehäuseteil **4** und zweiter Gehäuseteil **7** jedoch auch vor Ort, am jeweiligen Prüfaufbau mittels genannter extrudierender Fertigungsverfahren hergestellt werden. Auf diese Art und Weise kann die erfindungsgemäße Propagationstestzelle **3** entsprechend den Anforderungen an den jeweiligen Ablauf des Propagationstests, den geometrischen Abmessungen des angewendeten Zellmoduls **1** sowie der entsprechenden Batteriezellen **2,** der erforderlichen Testparameter, wie der geometrischen Ausgestaltung des Nagels **5,** notwendiger elektrischer Isolation, der erforderlichen Eindringgeschwindigkeit des Nagels **5** oder auch die Anzahl, Art und Position von Temperatur- **10** und Druckmessstellen **11** angepasst werden. So können beispielsweise Druckmessstellen **11** in Ausgestaltung von Dehnungsmessstreifen auch nachträglich an die Oberflächen des ersten Gehäuseteils **4,** des zweiten Gehäuseteils **7** sowie der gesamten Propagationstestzelle **3** angeordnet werden. In einer alternativen Ausführungsform umfassen Druckmessstellen **11** Dehnungsmessstreifen und/oder piezoelektrische Messstellen. In einer weiteren alternativen Ausführungsform umfassen Temperaturmessstellen **10** einfache Thermoelemente.

### Bezugszeichenliste

- **1**: Zellmodul
- **2**: Batteriezelle
- **3**: Propagationstestzelle
- **4**: erstes Gehäuseteil
- **5**: Nagel
- **6**: Vortriebsmechanismus
- **7**: zweites Gehäuseteil
- **8**: Durchgangsbohrung
- **9**: Testzellenschnittstelle
- **10**: Temperaturmessstelle
- **11**: Druckmessstelle
- **12**: mechanischer Vortriebsmechanismus
- **13**: Nagelführungsadapter
- **14**: Nagelführungspassung
- **15**: Anode
- **16**: Kathode
- **17**: Separator
- **18**: pneumatischer Vortriebsmechanismus
- **B_{xyz}**: Eckpunkte erstes Gehäuseteil
- **C_{xyz}**: Eckpunkte zweites Gehäuseteil
- **MA**: Bewegungsachse Nagel
- **SB**: Bezugsfläche erstes Gehäuseteil
- **SC**: Bezugsfläche zweites Gehäuseteil

## Patentansprüche

1. Propagationstestzelle (3), wobei
- mindestens eine einzelne von den Batteriezellen (2) innerhalb eines Zellmoduls (1) durch die Propagationstestzelle (3) substituierbar ist,
- über die Propagationstestzelle (3) ein Propagationstest von innen heraus initialisierbar ist,
- die Propagationstestzelle (3) einen Mechanismus (6) zum Einführen eines Nagels (5) in eine benachbarte Batteriezelle (2) umfasst, wobei der Propagationstest ohne äußere Beschädigung des Zellmoduls (1) initialisiert werden kann.

2. Propagationstestzelle (3) nach Anspruch 1, umfassend
• einen ersten Gehäuseteil (4), der eine quaderförmige äußere Formgestalt innehat, umfassend wenigstens einen vollständig oder teilweise im Inneren angeordneten Vortriebsmechanismus (6), der eingerichtet ist, um den Nagel (5) entlang einer Bewegungsachse (MA) zu bewegen,
• einen Nagel (5), der mechanisch mit dem Vortriebsmechanismus (6) gekoppelt und in der Art angeordnet ist, dass dessen Mittenachse seiner Längsausdehnung koaxial zur Bewegungsachse (MA) verläuft, sowie
• einen zweiten Gehäuseteil (7), umfassend eine Bezugsfläche (SC), die parallel und entgegengerichtet zu einer Bezugsfläche (SB) des ersten Gehäuseteils (4) angeordnet ist sowie mit jener in Kontakt steht, wenigstens einen Durchgang, der vollständig oder teilweise geöffnet oder verschlossen und der koaxial zur Bewegungsachse (MA) des Nagels (5) angeordnet ist sowie eine Durchgangsquerschnittsfläche aufweist, die größer als der Durchmesser des Schaftes des Nagels (5) ist.

3. Propagationstestzelle (3) nach Anspruch 1 oder 2, **dadurch gekennzeichnet, dass** die Abmessungen der äußeren Formgestalt der Propagationstestzelle (3) einem Vielfachen der jeweiligen Abmessungen einer Batteriezelle (2) entsprechen, mit welcher die Propagationstestzelle (3) innerhalb eines Zellmoduls (1) angeordnet sein kann.

4. Propagationstestzelle (3) nach Anspruch 2 oder 3, **dadurch gekennzeichnet, dass** die Bewegungsachse (MA) des Nagels (5) einer Orthogonalen zur Bezugsfläche (SB) des ersten Gehäuseteils (4) entspricht und diese in der Art angeordnet ist, dass der Nagel (5) auf seiner Bewegung entlang der genannten Bewegungsachse (MA) den Durchgang des zweiten Gehäuseteils (7) passiert.

5. Propagationstestzelle (3) nach Anspruch 2 bis 4, **dadurch gekennzeichnet, dass** der Nagel (5) eine Längsausdehnung umfasst, die wenigstens der Summe der Breite des zweiten Gehäuseteils (7) und einer erforderlichen Eindringtiefe in wenigstens eine benachbarte Batteriezelle (2) entspricht, wobei der Vortriebsmechanismus (6) eingerichtet ist, um den Nagel (5) in wenigstens einem Hub zu bewegen, der der erforderlichen Eindringtiefe entspricht.

6. Propagationstestzelle (3) nach Anspruch 2 bis 5, **dadurch gekennzeichnet, dass** der erste Gehäuseteil (4) und/oder der zweite Gehäuseteil (7) wenigstens eine Temperatur- (10) und/oder Druckmessstelle (11) umfassen, wobei die genannten Temperatur- (10) und/oder Druckmessstellen (11) in die beiden genannten Gehäuseteile (SB, SC) integriert oder auf wenigstens einer Oberfläche von diesen angeordnet sind.

7. Propagationstestzelle (3) nach Anspruch 6, **dadurch gekennzeichnet, dass** der erste Gehäuseteil (4) und/oder der zweite Gehäuseteil (7) wenigstens eine Testschnittstelle (9) umfassen, die eingerichtet ist, um eine physische Verbindung von dem Vortriebsmechanismus (6) und/oder den Temperatur- (10) und/oder Druckmessstellen (11) zu der weiteren Umgebung der Propagationstestzelle (3) herzustellen.

8. Propagationstestzelle (3) nach Anspruch 2 bis 7, **dadurch gekennzeichnet, dass** der Durchgang des zweiten Gehäuseteils (7) wenigstens eine Durchgangsbohrung (8) mit einer Passung umfasst und/oder, dass der zweite Gehäuseteil (7) wenigstens ein weiteres Führungselement (14) umfasst, wobei die Durchgangsbohrung (8) und das Führungselement (14) eingerichtet sind, um den Nagel (5) in seiner Bewegung auf der Bewegungsachse (MA) zu führen und/oder die Propagationstestzelle (3) gegenüber der wenigstens einen benachbarten Batteriezelle (2) gegen Reaktionsgase abzudichten.

9. Propagationstestzelle (3) nach Anspruch 2 bis 8, **dadurch gekennzeichnet, dass** die beiden Gehäuseteile (4, 7) Materialien umfassen, die eingerichtet sind, um die Propagationstestzelle (3) in den physikalischen Eigenschaften der Wärmeleitfähigkeit, Wärmekapazität, elektrischen Leitfähigkeit sowie E-Modul denen der weiteren Batteriezellen (2) des Zellmoduls (1), in welchem die genannte Propagationstestzelle (3) angewendet wird, nachzuempfinden, insbesondere Materialien, die mittels extrudierenden Fertigungsverfahren, vorzugsweise 3D-Metalldruck verarbeitbar sind sowie weiteren Materialien, die eingerichtet sind, um die Propagationstestzelle (3) elektrisch gegenüber den weiteren genannten Batteriezellen (2) zu isolieren, insbesondere mittels einer Folierung an wenigstens einer Außenfläche der beiden Gehäuseteile (4, 7) und/oder einer keramischen Ummantelung des Nagels (5).

10. Verfahren zum Durchführen eines Propagationstests bei einem Batteriemodul (1), umfassend wenigstens zwei Batteriezellen (2), **gekennzeichnet durch** die Schritte:
• (S1) Substituieren von wenigstens einer der Batteriezellen (2) mit einer Propagationstestzelle (3) nach einem der vorherigen Ansprüche;
• (S2) physische und elektrische Integration der Propagationstestzelle (3) innerhalb des Zellmoduls (1);
• (S3) Verbindung des Vortriebsmechanismus (6) und Vernetzung von Temperatur- (10) und Druckmessstellen (11) mit dem weiteren Prüfaufbau;
• (S4) Vorbereitung des Zellmoduls (1) durch elektrisches Laden des Akkumulators und /oder Überprüfen von dessen Funktionstüchtigkeit innerhalb des Prüfaufbaus;
• (S5) Einleitung der messtechnischen Erfassung von Messparametern wie Spannungs-, Temperatur- und/oder Druckverläufe sowie weiterer;
• (S6) Initialisierung des Propagationstests durch Betätigung des Vortriebsmechanismus (6) der Propagationstestzelle (3), wobei der genannte Vortriebsmechanismus (6) einen Nagel (5) in wenigstens eine benachbarte Batteriezelle (2) stößt, sodass wenigstens je eine Anode und eine Kathode durchdrungen werden, wobei ein innerer elektrischer Kurzschluss in der genannten Batteriezelle (2) entsteht.

## Claims

1. Propagation test cell (3), wherein
- at least one individual of the battery cells (2) within a cell module (1) can be substituted by the propagation test cell (3),
- a propagation test can be initialized from the inside via the propagation test cell (3),
- the propagation test cell (3) comprises a mechanism (6) for inserting a nail (5) into an adjacent battery cell (2), wherein the propagation test can be initialized without external damage to the cell module (1).

2. Propagation test cell (3) according to claim 1, comprising
• a first housing part (4) which has a cuboid external shape, comprising at least one drive mechanism (6) arranged completely or partially in the interior, which is configured to move the nail (5) along a movement axis (MA),
• a nail (5) which is mechanically coupled to the drive mechanism (6) and arranged in such a way that its central axis of its longitudinal extent runs coaxially to the movement axis (MA), and
• a second housing part (7), comprising a reference surface (SC) which is arranged parallel and oppositely directed to a reference surface (SB) of the first housing part (4) and is in contact with it, at least one passage which is completely or partially opened or closed and which is arranged coaxially to the movement axis (MA) of the nail (5) and has a passage cross-sectional area which is larger than the diameter of the shank of the nail (5).

3. Propagation test cell (3) according to claim 1 or 2, **characterized in that** the dimensions of the external shape of the propagation test cell (3) correspond to a multiple of the respective dimensions of a battery cell (2) with which the propagation test cell (3) can be arranged within a cell module (1).

4. Propagation test cell (3) according to claim 2 or 3, **characterized in that** the movement axis (MA) of the nail (5) corresponds to an orthogonal to the reference surface (SB) of the first housing part (4) and is arranged in such a way that the nail (5), in its movement along the said movement axis (MA), passes through the passage of the second housing part (7).

5. Propagation test cell (3) according to claim 2 to 4, **characterized in that** the nail (5) comprises a longitudinal extent which corresponds at least to the sum of the width of the second housing part (7) and a required penetration depth into at least one adjacent battery cell (2), wherein the advance mechanism (6) is configured to move the nail (5) in at least one stroke which corresponds to the required penetration depth.

6. Propagation test cell (3) according to claim 2 to 5, **characterized in that** the first housing part (4) and/or the second housing part (7) comprise at least one temperature measuring point (10) and/or pressure measuring point (11), wherein the said temperature measuring points (10) and/or pressure measuring points (11) are integrated into the two said housing parts (SB, SC) or are arranged on at least one surface of these.

7. Propagation test cell (3) according to claim 6, **characterized in that** the first housing part (4) and/or the second housing part (7) comprise at least one test interface (9) which is configured to establish a physical connection from the drive mechanism (6) and/or the temperature measuring points (10) and/or pressure measuring points (11) to the further environment of the propagation test cell (3).

8. Propagation test cell (3) according to claim 2 to 7, **characterized in that** the passage of the second housing part (7) comprises at least one passage bore (8) with a fit and/or that the second housing part (7) comprises at least one further guide element (14), wherein the passage bore (8) and the guide element (14) are configured to guide the nail (5) in its movement on the movement axis (MA) and/or to seal the propagation test cell (3) with respect to the at least one adjacent battery cell (2) against reaction gases.

9. Propagation test cell (3) according to claim 2 to 8, **characterized in that** the two housing parts (4, 7) comprise materials which are configured to simulate the propagation test cell (3) in the physical properties of thermal conductivity, heat capacity, electrical conductivity and modulus of elasticity to those of the further battery cells (2) of the cell module (1) in which the said propagation test cell (3) is used, in particular materials which can be processed by extrusion manufacturing processes, preferably 3D metal printing, and further materials which are configured to electrically insulate the propagation test cell (3) from the further said battery cells (2), in particular by means of a foiling on at least one outer surface of the two housing parts (4, 7) and/or a ceramic sheathing of the nail (5).

10. Method for carrying out a propagation test on a battery module (1), comprising at least two battery cells (2), **characterized by** the steps:
• (S1) substituting at least one of the battery cells (2) with a propagation test cell (3) according to one of the preceding claims;
• (S2) physical and electrical integration of the propagation test cell (3) within the cell module (1);
• (S3) connection of the advance mechanism (6) and networking of temperature measuring points (10) and pressure measuring points (11) with the further test setup;
• (S4) preparation of the cell module (1) by electrical charging of the accumulator and/or checking its operability within the test setup;
• (S5) initiation of the metrological acquisition of measurement parameters such as voltage, temperature and/or pressure profiles and further;
• (S6) initialization of the propagation test by actuating the advance mechanism (6) of the propagation test cell (3), wherein the said advance mechanism (6) thrusts a nail (5) into at least one adjacent battery cell (2), such that at least one anode and one cathode are penetrated, wherein an internal electrical short circuit is created in the said battery cell (2).

## Revendications

1. Cellule d'essai de propagation (3), dans laquelle
- au moins une cellule individuelle parmi les cellules de batterie (2) à l'intérieur d'un module de cellules (1) peut être substituée par la cellule d'essai de propagation (3),
- un essai de propagation peut être initialisé de l'intérieur via la cellule d'essai de propagation (3),
- la cellule d'essai de propagation (3) comprend un mécanisme (6) pour l'introduction d'un clou (5) dans une cellule de batterie adjacente (2), l'essai de propagation pouvant être initialisé sans dommage externe du module de cellules (1).

2. Cellule d'essai de propagation (3) selon la revendication 1, comprenant
• une première partie de boîtier (4) qui a une forme extérieure parallélépipédique, comprenant au moins un mécanisme d'entraînement (6) disposé totalement ou partiellement à l'intérieur, qui est conçu pour déplacer le clou (5) le long d'un axe de mouvement (MA),
• un clou (5) qui est couplé mécaniquement au mécanisme d'entraînement (6) et disposé de telle manière que son axe médian de son extension longitudinale s'étend coaxialement à l'axe de mouvement (MA), ainsi que
• une seconde partie de boîtier (7), comprenant une surface de référence (SC) qui est disposée parallèlement et en sens opposé à une surface de référence (SB) de la première partie de boîtier (4) et est en contact avec celle-ci, au moins un passage qui est ouvert ou fermé totalement ou partiellement et qui est disposé coaxialement à l'axe de mouvement (MA) du clou (5) ainsi qu'une surface de section transversale de passage qui est plus grande que le diamètre de la tige du clou (5).

3. Cellule d'essai de propagation (3) selon la revendication 1 ou 2, **caractérisée en ce que** les dimensions de la forme extérieure de la cellule d'essai de propagation (3) correspondent à un multiple des dimensions respectives d'une cellule de batterie (2) avec laquelle la cellule d'essai de propagation (3) peut être disposée à l'intérieur d'un module de cellules (1).

4. Cellule d'essai de propagation (3) selon la revendication 2 ou 3, **caractérisée en ce que** l'axe de mouvement (MA) du clou (5) correspond à une orthogonale à la surface de référence (SB) de la première partie de boîtier (4) et est disposé de telle manière que le clou (5), lors de son mouvement le long dudit axe de mouvement (MA), traverse le passage de la seconde partie de boîtier (7).

5. Cellule d'essai de propagation (3) selon la revendication 2 à 4, **caractérisée en ce que** le clou (5) comprend une extension longitudinale qui correspond au moins à la somme de la largeur de la seconde partie de boîtier (7) et d'une profondeur de pénétration requise dans au moins une cellule de batterie adjacente (2), le mécanisme d'entraînement (6) étant conçu pour déplacer le clou (5) en au moins une course qui correspond à la profondeur de pénétration requise.

6. Cellule d'essai de propagation (3) selon la revendication 2 à 5, **caractérisée en ce que** la première partie de boîtier (4) et/ou la seconde partie de boîtier (7) comprennent au moins un point de mesure de température (10) et/ou de pression (11), lesdits points de mesure de température (10) et/ou de pression (11) étant intégrés dans les deuxdites parties de boîtier (SB, SC) ou disposés sur au moins une surface de celles-ci.

7. Cellule d'essai de propagation (3) selon la revendication 6, **caractérisée en ce que** la première partie de boîtier (4) et/ou la seconde partie de boîtier (7) comprennent au moins une interface de test (9) qui est conçue pour établir une connexion physique du mécanisme d'entraînement (6) et/ou des points de mesure de température (10) et/ou de pression (11) à l'environnement supplémentaire de la cellule d'essai de propagation (3).

8. Cellule d'essai de propagation (3) selon la revendication 2 à 7, **caractérisée en ce que** le passage de la seconde partie de boîtier (7) comprend au moins un trou de passage (8) avec un ajustement et/ou **en ce que** la seconde partie de boîtier (7) comprend au moins un autre élément de guidage (14), le trou de passage (8) et l'élément de guidage (14) étant conçus pour guider le clou (5) dans son mouvement sur l'axe de mouvement (MA) et/ou pour étanchéifier la cellule d'essai de propagation (3) par rapport à la au moins une cellule de batterie adjacente (2) contre les gaz de réaction.

9. Cellule d'essai de propagation (3) selon la revendication 2 à 8, **caractérisée en ce que** les deux parties de boîtier (4, 7) comprennent des matériaux qui sont conçus pour faire reproduire la cellule d'essai de propagation (3) dans les propriétés physiques de conductivité thermique, capacité calorifique, conductivité électrique ainsi que module d'élasticité à celles des autres cellules de batterie (2) du module de cellules (1) dans lequel ladite cellule d'essai de propagation (3) est appliquée, en particulier des matériaux qui peuvent être traités au moyen de procédés de fabrication par extrusion, de préférence impression métallique 3D, ainsi que d'autres matériaux qui sont conçus pour isoler électriquement la cellule d'essai de propagation (3) par rapport aux autresdites cellules de batterie (2), en particulier au moyen d'un film appliqué sur au moins une surface extérieure des deux parties de boîtier (4, 7) et/ou d'un gainage céramique du clou (5).

10. Procédé pour réaliser un essai de propagation sur un module de batterie (1), comprenant au moins deux cellules de batterie (2), **caractérisé par** les étapes suivantes :
• (S1) substitution d'au moins une des cellules de batterie (2) par une cellule d'essai de propagation (3) selon l'une des revendications précédentes ;
• (S2) intégration physique et électrique de la cellule d'essai de propagation (3) à l'intérieur du module de cellules (1) ;
• (S3) connexion du mécanisme d'avance (6) et mise en réseau des points de mesure de température (10) et de pression (11) avec le montage d'essai supplémentaire ;
• (S4) préparation du module de cellules (1) par charge électrique de l'accumulateur et/ou vérification de son aptitude au fonctionnement dans le montage d'essai ;
• (S5) initiation de l'acquisition métrologique de paramètres de mesure tels que les évolutions de tension, de température et/ou de pression ainsi que d'autres ;
• (S6) initialisation de l'essai de propagation par actionnement du mécanisme d'avance (6) de la cellule d'essai de propagation (3), ledit mécanisme d'avance (6) poussant un clou (5) dans au moins une cellule de batterie adjacente (2), de telle sorte qu'au moins une anode et une cathode sont traversées, un court-circuit électrique interne étant créé dans ladite cellule de batterie (2).
